# FASCICULE DE BREVET EUROPEEN

(11) **EP 0 427 586 B1**
(45) Date de publication et mention de la délivrance du brevet: **01.03.1995**
(21) Numéro de dépôt: 90402985.7
(22) Date de dépôt: 23.10.1990
(51) Int. Cl.: H04B 10/24

(54) **Procédé et dispositif de transmission d'un signal électromagnétique dans une fibre optique**
Verfahren und Vorrichtung zur Übertragung eines elektromagnetischen Signals in einer optischen Faser
Method and device for transmission of an electromagnetic signal via a fibre optic

(30) Priorité: 09.11.1989 FR 8914714
(43) Date de publication de la demande: 15.05.1991
(73) Titulaire: DASSAULT ELECTRONIQUE, F-92214 Saint-Cloud (FR)
(72) Inventeur: Nicole, Pierre, F-92210 Saint-Cloud (FR)
(74) Mandataire: Plaçais, Jean-Yves

(56) Documents cités:
- EP-A- 0 287 379
- WO-A-88/03730
- GB-A- 2 181 921
- US-A- 4 879 763
- PATENT ABSTRACTS OF JAPAN, vol. 10, no. 35 (E-380)[2092], 12 février 1986;& JP-A-60 194 632
- APPLIED OPTICS, vol. 26, no. 16, 15 août 1987, pages 3470-3473, Optical Society of America; C. ZIZZO: "Optical circulator for fiber-optic transceivers"

## Description

L'invention concerne la transmission d'un signal électromagnétique.

Il est parfois nécessaire, lorsqu'un signal électromagnétique est disponible en un lieu prédéterminé, de le transmettre en un autre lieu, notamment à des fins d'analyse ou de traitement.

Pour effectuer une telle transmission, il a été envisagé de générer, à une extrémité d'une fibre optique, un signal optique, de le moduler par le signal électromagnétique à transmettre, puis d'analyser à l'autre extrémité de la fibre, le signal optique modulé ayant transité dans celle-ci pour déterminer les caractéristiques du signal électromagnétique.

Cependant, outre qu'une telle transmission nécessite généralement l'emploi, aux deux extrémités de la fibre, d'éléments de haute technicité donc d'un coût élevé et susceptibles, sinon de défaillances, du moins d'un contrôle fréquent, elle s'avère très mal adaptée à une application avantageuse mais non limitative de l'invention, consistant à transmettre un signal électromagnétique depuis un lieu difficile d'accès pour une équipe de maintenance. En effet, en cas de défaillance d'un composant, les délais d'intervention peuvent être relativement longs et entraîner par conséquent une interruption prolongée de la transmission qui peut s'avérer inenvisageable dans certains cas.

Par ailleurs, il est connu d'utiliser une fibre optique en communication, pour transmettre des données, c'est à dire des informations numériques de cadence fixe (GB-A-2 181 921; US-A-4 879 763).

Mais cela est sans rapport avec la transmission d'un signal électromagnétique, en particulier d'un signal hyperfréquence à large bande, dont il convient de respecter intégralement les caractéristiques spectrales (alors que seules les données importent en communication).

L'invention vient proposer une combinaison nouvelle de moyens visant à apporter une solution plus satisfaisante à ce problème.

Un but de l'invention est de proposer une transmission de signal électromagnétique permettant l'emploi, sur le lieu de présence du signal électromagnatique, d'éléments simples d'un point de vue mécanique et électronique et présentant une très haute fiabilité avec un coût le plus faible possible.

Un autre but de l'invention est de proposer une transmission présentant de très bonnes caractéristiques, notamment au niveau du rapport signal/bruit.

L'invention part d'un dispositif de transmission d'un signal par voie optique du type comprenant :
- une fibre optique,
- à une première extrémité de celle-ci, un premier ensemble optique propre d'une part, à injecter dans ladite fibre un signal optique d'entrée polarisé issu d'un générateur, et, d'autre part, à récupérer de la fibre un signal optique de retour pour le délivrer à des moyens électro-optiques d'analyse,
- à une deuxième extrémité de la fibre, un deuxième ensemble optique propre, d'une part à recevoir un signal optique aller émergeant de la fibre du fait du transit dans celle-ci dudit signal optique d'entrée, d'autre part à le retourner dans la fibre, remodulé sur la base d'un signal modulant localement disponible.

Ce dispositif est remarquable en ce que ce signal modulant est issu de la capture d'un signal électromagnétique hyperfréquence à large bande de nature analogique, en ce que le premier ensemble optique comprend de premiers moyens formant circulateur optique, avec une entrée pour recevoir le signal optique d'entrée polarisé, une entrée/sortie reliée à la première extrémité de la fibre, et une sortie reliée aux moyens électro-optiques d'analyse, en ce que le deuxième ensemble optique comprend de seconds moyens formant circulateur optique, avec une entrée/sortie reliée à la seconde extrémité de la fibre, ainsi qu'une sortie et une entrée associées à un circuit en boucle comportant, disposés en série selon un parcours uni-directionnel, un modulateur électro-optique du signal optique émergeant de la fibre par le signal modulant, et des moyens de conversion orthogonale de la polarisation optique, de sorte que ce deuxième ensemble optique injecte en retour dans la fibre un signal optique, modulé en fonction du signal électromagnétique hyperfréquence à large bande, et de polarisation orthogonale à celle du signal aller, tandis que les moyens électro-optiques d'analyse permettent de déterminer les caractéristiques dudit signal électromagnétique, à partir du signal optique de retour.

L'invention a également pour objet un dispositif de transmission d'un signal électromagnétique, caractérisé en ce qu'il comprend:
à une première extrémité d'une fibre optique,
un premier ensemble optique propre d'une part, à injecter dans ladite fibre un signal optique d'entrée polarisé issu d'un générateur, et, d'autre part, à récupérer en retour un signal optique de retour pour le délivrer à des moyens d'analyse électrooptiques,
et à une deuxième extrémité de la fibre,
un deuxième ensemble optique propre d'une part, à recevoir un signal optique polarisé émergeant de la fibre après transit dans celle-ci dudit signal optique d'entrée, à le délivrer à des moyens de traitement comportant, disposés en série, un modulateur électrooptique de ce signal optique par le signal électromagnétique hyperfréquence à large bande à transmettre, et des moyens de conversion de polarisation optique, et, d'autre part, à injecter en retour dans la fibre ledit signal optique modulé de polarisation convertie;
lesdits moyens d'analyse électrooptiques déterminent alors les caractéristiques dudit signal électromagnétique, à partir du signal optique de retour, émergeant de la fibre après transit dans celle-ci dudit signal optique modifié.

D'autres avantages et caractéristiques de l'invention apparaîtront à l'examen de la description détaillée ci-après et des dessins annexés sur lesquels :
- la figure 1 est une représentation schématique d'un premier mode de réalisation d'un dispositif de transmission selon l'invention,
- la figure 2 est une représentation schématique plus détaillée d'un jeu de prismes à séparation de polarisation, et,
- la figure 3 est une représentation schématique d'un deuxième mode de réalisation d'un dispositif de transmission selon l'invention.

Les dessins comportent des éléments de caractère certain. A ce titre, ils font partie intégrante de la description et pourront non seulement servir à mieux faire comprendre la description détaillée ci-après mais aussi contribuer, le cas échéant, à la définition de l'invention.

On suppose maintenant, bien que l'invention ne soit pas limitée à cette application particulière, qu'il faille récupérer et analyser un signal électromagnétique issu par exemple d'une antenne située en un endroit difficile d'accès pour une équipe de maintenance chargée de contrôler et/ou de dépanner des équipements défaillants. Un but général de l'invention consiste alors à ne disposer, au pied de l'antenne, que des équipements de grande fiabilité et peu chers, et à déporter, dans un lieu où les contraintes d'implantation sont moins drastiques, les éléments du dispositif dont la conception et la fabrication nécessitent un contrôle plus fréquent et une action rapide de dépannage en cas de mauvais fonctionnement.

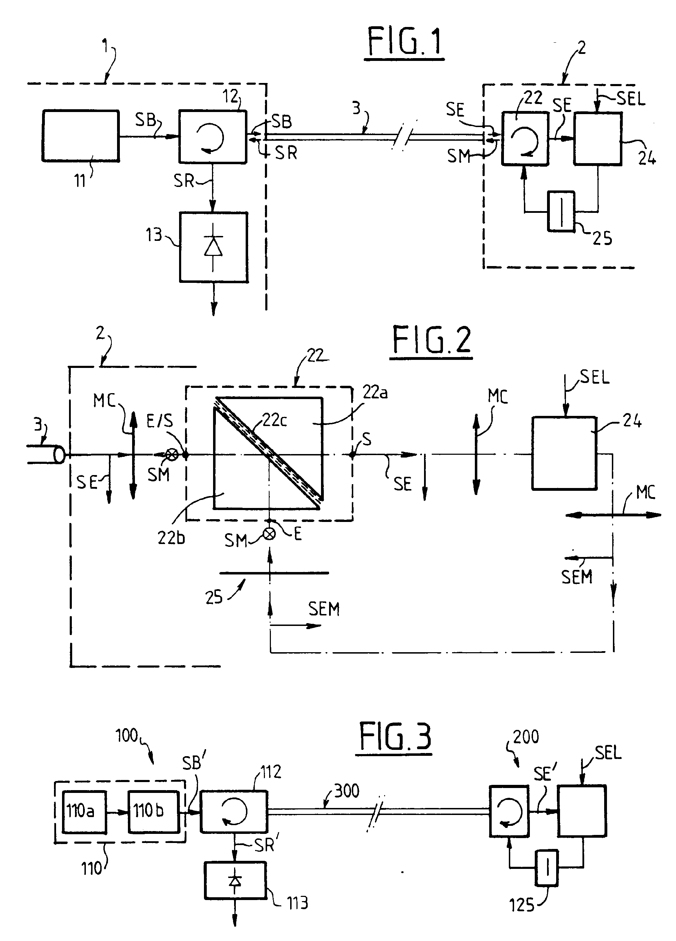

Ainsi, tel qu'illustré sur la figure 1, le dispositif comporte un premier système électrooptique 1 disposé à une première extrémité d'une fibre optique 3, en principe monomode, et, à la deuxième extrémité de cette fibre optique, un deuxième système électrooptique 2 disposé au pied de l'antenne pour recevoir le signal électromagnétique SEL.

Au sein de ce premier système électrooptique 1, est prévu un premier ensemble optique comportant des moyens 12 formant circulateur optique, désignés plus simplement dans la suite, sauf mention contraire, "circulateur optique", et que l'on détaillera ci-après. Ce circulateur optique possède une borne d'entrée propre à recevoir un signal optique de base SB, une borne d'entrée/sortie reliée à la première extrémité de la fibre optique, pour d'une part injecter dans ladite fibre le signal SB et recevoir un signal optique de retour SR aux fins de délivrance, par l'intermédiaire d'une borne de sortie, à des moyens d'analyse électrooptiques 13, tels qu'un photodétecteur.

Le signal optique SB, de puissance constante, est issu d'un générateur 11 tel qu'une diode laser semi-conductrice. Le signal SB est donc un signal polarisé. A cet égard, bien qu'un tel signal optique soit généralement polarisé elliptiquement, on admettra ici, en raison de la faible puissance de la composante orthogonale de ce signal par rapport à la puissance optique totale, que le signal SB est polarisé linéairement, ce qui revient à accepter de perdre la puissance de ladite composante orthogonale.

Au sein du deuxième système électrooptique 2, est également prévu un circulateur optique 22 dont la borne d'entrée/sortie est propre à recevoir d'une part un signal optique SE émergeant après transit dans la fibre du signal de base, et, d'autre part, à réinjecter un signal optique modifié qui après transit inverse dans la fibre fournira le signal de retour SR.

Le circulateur optique 22, de structure analogue à celle du circulateur optique 12, comporte une borne de sortie délivrant le signal émergeant SE à un modulateur électrooptique 24 du type à onde progressive. Des moyens 25 de conversion orthogonale de polarisation optique, tels qu'une lame demi-onde, sont disposés en série entre la sortie du modulateur électrooptique et la borne d'entrée du circulateur optique 22.

On rappelle ici brièvement qu'un modulateur électrooptique à onde progressive comporte un guide d'onde recouvert d'électrodes dans lesquelles on fait circuler le signal électromagnétique modulant. Ainsi, l'indice optique du guide d'onde est modifié et le signal optique le traversant est modulé par le signal électromagnétique. Parmi les modulateurs électrooptiques à onde progressive, on pourra par exemple utiliser un modulateur de type Mach-Zehnder. L'homme du métier pourra se référer pour plus de détails à l'article de ROD C. ALFERNESS, "Waveguide Electrooptic Modulators", IEEE TRANSACTIONS ON MICROWAVE THEORY AND TECHNIQUES, Vol. MTT-30, n° 8, août 1982, dont le contenu est incorporé à la présente description à toutes fins utiles.

Le circulateur optique 22 comporte un jeu de deux prismes 22a et 22b à séparation de polarisation tel que celui disponible auprès de la Société des Etats-Unis MELLES GRIOT sous la référence 03 PBS (figure 2). Ces deux prismes sont solidarisés l'un à l'autre par leur face oblique respective (hypoténuse) et il est disposé au niveau de cette interface, un film multicouches diélectrique 22c.

Un tel circulateur optique fonctionne en lumière parallèle. Des moyens de collimation MC, tels que des lentilles convergentes, sont alors prévus entre l'extrémité de la fibre optique 3 et le circulateur, entre le circulateur et l'entrée du modulateur et entre la sortie du modulateur et la lame demi-onde 25.

La combinaison de la composition du film multicouches et de la valeur de l'angle d'incidence (ici 45°) d'un faisceau lumineux atteignant l'interface du jeu de prismes permet de laisser passer, à travers les deux prismes, depuis la borne d'entrée/sortie ES jusqu 'à la borne de sortie S, le signal émergeant SE que l'on suppose ici polarisé linéairement dans le plan de la figure. Ce signal SE, après avoir été modulé dans le modulateur électrooptique 24 conserve la même polarisation linéaire et est amené sur la lame demi-onde 25. A des fins de simplification, les moyens optiques destinés à véhiculer les différents signaux à l'intérieur du système électrooptique 2 n'ont pas été représentés. On pourra par exemple ici utiliser à cet effet soit des miroirs soit une autre fibre optique.

Après avoir traversé la lame demi-onde 25, le signal modifié SM est alors polarisé linéairement dans un plan perpendiculaire au plan de la figure 2. Ce signal, entrant par la borne d'entrée E du circulateur est alors renvoyé au niveau de l'interface des deux prismes à la borne d'entrée/sortie ES et donc réinjecté dans la fibre optique.

On a représenté ici, pour une meilleur compréhension, des moyens de conversion orthogonale de polarisation optique distincts du circulateur 22. Cependant, on peut envisager un composant unique intégrant à la fois les fonctions de conversion de polarisation et celles de circulation optique.

Le fonctionnement du dispositif est alors le suivant.

Le signal de base polarisé SB, généré par la diode laser semi-conductrice est injecté à la première extrémité de la fibre optique. Le circulateur optique 22, récupère le signal émergeant SE, après transit dans la fibre du signal de base, et le délivre au modulateur électrooptique 24. Celui-ci module le signal SE par le signal électromagnétique SEL issu de l'antenne. Le signal modulé SEM, ayant la même polarisation linéaire que le signal émergeant SE subit une conversion orthogonale de polarisation à l'aide de la lame demi-onde 25 et est réinjecté à la deuxième extrémité de la fibre optique par le circulateur 22. Ce signal modifié SM transite donc, en sens inverse, dans la fibre optique et le circulateur 12 récupère à la première extrémité le signal de retour SR après transit du signal SM. Ce signal de retour est alors délivré au photodétecteur 13 qui en déduit les caractéristiques du signal électromagnétique SEL.

La combinaison de moyens ainsi décrite permet d'apporter une solution au problème posé. En effet, en utilisant une fibre optique de manière bidirectionnelle, il s'est avéré possible de n'implanter au sein du système électrooptique 2 que des composants de faible coût et de haute fiabilité. De ce fait, il a été alors possible de regrouper à la première extrémité de la fibre optique, les éléments du dispositif nécessitant une attention plus particulière et un contrôle plus fréquent tel que le générateur de signal optique et les moyens d'analyse électrooptiques.

De plus, l'utilisation de signaux optiques de polarisations différentes circulant en sens inverse au sein de la fibre, permet d'éviter des interférences entre ces différents signaux, diminue ainsi les pertes du dispositif et en augmente le rendement.

Enfin, l'utilisation de circulateurs optiques, tels que des jeux de prismes à séparation de polarisation, permet de minimiser encore les pertes du dispositif et d'augmenter le rapport signal/bruit.

Il s'est avéré possible de transmettre ainsi des signaux large bande, en particulier hyperfréquence, en utilisant un photodétecteur 13, en particulier hyperfréquence, dont la bande passante est égale à la bande de fréquence du signal électromagnétique SEL.

Lorsqu'on veut transmettre un signal électromagnétique SEL en bande étroite, c'est-à-dire un signal dont le rapport Fmax/Fmin de la fréquence maximale sur la fréquence minimale est inférieure ou égale à 2, on peut avantageusement utiliser le mode de réalisation illustré sur la figure 3. sur cette figure, les éléments analogues ou ayant une fonction analogue à ceux représentés sur la figure 1 ont des références augmentées de 100 ou affectées d'un ′ par rapport à celles qu'ils avaient sur la figure 1. Seules les différences entre ces deux figures seront décrites.

Dans ce mode de réalisation, le générateur 110 comporte la diode laser semi-conductrice 110a ainsi qu'un oscillateur local 110b de fréquence Fo propre à moduler le signal émis par la diode et délivrer un signal de base SB′ polarisé et modulé. Bien entendu, on pourait utiliser, à la place d'un oscillateur 110b externe, une diode laser semi-conductrice propre à délivrer directement un signal modulé.

Après modulation du signal SE′ par le signal électromagnétique SEL en bande étroite à transmettre, et conversion orthogonale de polarisation, le signal de retour SR′ est délivré à l'entrée du photodétecteur 113. Celui-ci possède alors une bande passante adaptée au spectre fréquentiel du signal SEL, recentré sur la fréquence de l'oscillateur. En d'autres termes, on obtient directement en sortie du photodétecteur des signaux de fréquence intermédiaire représentatifs des caractéristiques du signal électromagnétique, c'est-à-dire des signaux compris dans l'intervalle de fréquence (Fmin-Fo ; Fmax-Fo)

On évite ainsi, l'utilisation en aval du photodétecteur 113 d'un mélangeur hyperfréquence.

L'invention n'est pas limitée aux modes de réalisation ci-dessus décrits mais en embrasse toutes les variations notamment les suivantes :
- on pourrait utiliser à la place des jeux de prismes à séparation de polarisation, tout autre moyen formant circulateur optique;
- on pourrait même éventuellement utiliser à la place de l'un et/ou l'autre des moyens formant circulateur optique, d'autres moyens tels que des coupleurs optiques classiques, notamment des guides d'onde en Y, associés à des isolateurs optiques. Cependant, une telle réalisation serait effectuée au détriment du rapport signal/bruit du dispositif puisque chacun de ces coupleurs occasionne une perte de puissance de 3 dB ;
- on pourrait également envisager d'utiliser des signaux optiques polarisés circulairement ou elliptiquement. Il conviendrait alors bien entendu d'adapter les différents ensembles optiques.
- il est également possible d'utiliser un générateur de lumière non polarisée; Cependant, dans ce cas, il convient de placer à la sortie de celui-ci un polariseur ;
- les moyens de conversion de polarisation réalisent ici une conversion orthogonale de polarisation. Cependant, il n'est pas exclu de faire circuler au sein de la fibre optique des signaux en sens inverse ayant des polarisations différentes mais non rigoureusement orthogonales entre elles. Dans un tel cas les performances du dispositif pourraient être amoindries;
- on pourrait également envisager d'utiliser un modulateur électrooptique intégrant une fonction de conversion de polarisation ce qui aurait alors pour effet de simplifier le circulateur optique ;
- il serait également possible de prévoir, dans certains cas, une fibre optique multimode, mais encore avec un risque d'amoindrissement des performances.

Bien entendu, certains des moyens décrits ci-dessus peuvent être omis dans les variantes où ils ne servent pas.

## Revendications

1. Dispositif de transmission d'un signal par voie optique, du type comprenant:
- une fibre optique (3),
- à une première extrémité (1) de celle-ci, un premier ensemble optique (12) propre d'une part, à injecter dans ladite fibre un signal optique d'entrée polarisé (SB) issu d'un générateur (11), et, d'autre part, à récupérer de la fibre un signal optique de retour (SR) pour le délivrer à des moyens électro-optiques d'analyse (13),
- à une deuxième extrémité (2) de la fibre, un deuxième ensemble optique (22) propre, d'une part à recevoir un signal optique (SE) aller émergeant de la fibre du fait du transit dans celle-ci dudit signal optique d'entrée, d'autre part à le retourner dans la fibre (3), remodulé (24) sur la base d'un signal modulant localement disponible (SEL),
caractérisé en ce que ce signal modulant (SEL) est issu de la capture d'un signal électromagnétique hyperfréquence à large bande de nature analogique,
en ce que le premier ensemble optique (12) comprend de premiers moyens (12) formant circulateur optique, avec une entrée pour recevoir le signal optique d'entrée polarisé (SB), une entrée/sortie reliée à la première extrémité de la fibre, et une sortie reliée aux moyens électro-optiques d'analyse (13),
en ce que le deuxième ensemble optique (22) comprend de seconds moyens (22) formant circulateur optique, avec une entrée/sortie reliée à la seconde extrémité de la fibre, ainsi qu'une sortie et une entrée associées à un circuit en boucle comportant, disposés en série selon un parcours unidirectionnel, un modulateur électro-optique (24) du signal optique (SE) émergeant de la fibre par le signal modulant (SEL), et des moyens de conversion orthogonale de la polarisation optique (25), de sorte que ce deuxième ensemble optique (22) injecte en retour dans la fibre un signal optique, modulé (SE+SEL) en fonction du signal électromagnétique hyperfréquence à large bande, et de polarisation orthogonale à celle du signal aller,
tandis que les moyens électro-optiques d'analyse (13) permettent de déterminer les caractéristiques dudit signal électromagnétique, à partir du signal optique de retour.

2. Dispositif selon la revendication 1, caractérisé en ce que les premiers moyens (12) formant circulateur optique comprennent deux prismes à séparation de polarisation.

3. Dispositif selon l'une des revendications 1 et 2, caractérisé en ce que les deuxièmes moyens (22) formant circulateur optique comprennent un jeu de deux prismes à séparation de polarisation.

4. Dispositif selon l'une des revendications précédentes, caractérisé en ce que les moyens de conversion de polarisation comprennent une lame demi-onde (25).

5. Dispositif selon l'une des revendications 1 à 4, caractérisé en ce que ledit générateur (11) génère un signal de base de puissance constante, la bande passante des moyens d'analyse (13) étant adaptée au spectre fréquentiel du signal électromagnétique hyperfréquence à large bande.

6. Dispositif selon l'une des revendications 1 à 5, caractérisé en ce que ledit générateur (110) comporte en outre un oscillateur (110b) propre à moduler le signal optique de base, la bande passante des moyens d'analyse (13) étant adaptée au spectre fréquentiel du signal électromagnétique, recentrée sur la fréquence de l'oscillateur.

7. Dispositif selon l'une des revendications 1 à 6, caractérisé en ce que le modulateur électro-optique (24) est du type à onde progressive.

8. Dispositif selon la revendication 7, caractérisé en ce que le modulateur électro-optique (24) est du type Mach-Zender.

## Patentansprüche

1. Vorrichtung zur optischen Übertragung eines Signals, welche umfaßt:
- eine optische Faser (3),
- an einem ersten Ende (1) hiervon einen ersten optischen Aufbau (12), welcher zum einen dazu dient, in diese Faser ein von einem Generator (11) erzeugtes polarisiertes optisches Eingangsignal (SB) einzukoppeln,und zum anderen von dieser Faser ein optisches Rücklaufsignal (SR) zu empfangen, um es auf elektrooptische Analysemittel (13) zu geben,
- an einem zweiten Ende (2) dieser Faser einen zweiten optischen Aufbau (22), welcher zum einen dazu dient, ein aus der Faser nach Durchlauf derselben aus diesem optische Eingangssignal hervorgehendes optisches Laufsignal zu empfangen, und zum anderen um es auf Grundlage eines lokal verfügbaren Modulationssignals (SEL) moduliert in die Faser (3) zurückzugeben,
**dadurch gekennzeichnet**,
daß dieses Modulationssignal (SEL) erzeugt wird durch Einfangen eines elektromagnetischen Hochfrequenz-Analogsignals mit großer Bandbreite;
daß dieser erste optische Aufbau (12) erste Mittel (12) umfaßt, welche eine optische Umlenkvorrichtung bilden, mit einem Eingang zum Empfang eines polarisierten optischen Eingangssignals (SB), einem mit dem ersten Ende der Faser verbundenen Eingang/Ausgang sowie mit einem mit elektrooptischen Analysemitteln (13) verbundenen Ausgang,
daß der zweite optische Aufbau (22) zweite Mittel (22) umfaßt, welche eine optische Umlenkvorrichtung bilden, mit einem mit dem zweiten Ende der Faser verbundenen Eingang/Ausgang sowie einem Eingang und einem Ausgang, welche mit einer Schleife verbunden sind, die einen in Reihe längs eines Pfads mit einer ausgezeichneten Laufrichtung geschalteten elektrooptischen Modulator (24) zum Modulieren des aus der Faser hervorgegangenen optischen Signals (SE) mittels des Modulationssignals (SEL) umfaßt, sowie Mittel (25) zur Drehung der optischen Polarisationebene um 90°, welche so aufgebaut sind, daß dieser zweite optische Aufbau (22) von neuem ein optisches Signal (SE+SEL) in die Faser einkoppelt, welches in Abhängigkeit vom elektromagnetischen Hochfrequenzsignal mit großer Bandbreite moduliert worden ist, und mit einer senkrecht zur Polarisationsebene des Laufsignals stehenden Polarisationsebene versehen ist,
wobei es die elektrooptischen Analysemittel (13) erlauben, die Charakteristika dieses elektromagnetischen Signals ausgehend von diesem optischen Rücklaufsignal zu bestimmen.

2. Vorrichtung nach Anspruch 1,
**dadurch gekennzeichnet**,
daß die ersten eine optische Umlenkvorrichtung bildenden Mittel (12) einen Satz zweier Prismen zur Trennung der Polarisationsebenen umfassen.

3. Vorrichtung nach einem der Ansprüche 1 und 2,
**dadurch gekennzeichnet**,
daß die zweiten eine optische Umlenkvorrichtung bildenden Mittel (22) einen Satz zweier Prismen zur Trennung der Polarisationsebenen umfassen.

4. Vorrichtung nach einem der Ansprüche 1 bis 3,
**dadurch gekennzeichnet**,
daß die Mittel zur Drehung der Polarisationsebene ein Halbwellen-Plättchen (25) umfassen.

5. Vorrichtung nach einem der Ansprüche 1 bis 4,
**dadurch gekennzeichnet**,
daß der Generator (11) ein Basissignal mit konstanter Leistung erzeugt, wobei der Durchlaßbereich der Analysemittel (13) an das Frequenzspektrum dieses elektromagnetischen Hochfrequenzsignals mit großer Bandbreite angepaßt ist.

6. Vorrichtung nach einem der Ansprüche 1 bis 5,
**dadurch gekennzeichnet**,
daß der Generator (110) unter anderem einen Schwingkreis (110B) umfaßt, welcher dazu dient, daß optische Basissignal zu modulieren, wobei der Durchlaßbereich der Analysemittel (13) an das Frequenzspektrum des elektromagnetischen Signals angepaßt und auf die Frequenz des Schwingkreises abgestimmt ist.

7. Vorrichtung nach einem der Ansprüche 1 bis 6,
**dadurch gekennzeichnet**,
daß der elektrooptische Modulator (24) mit fortlaufenden Wellen arbeitet.

8. Vorrichtung nach Anspruch 7,
**dadurch gekennzeichnet**,
daß es sich bei diesem elektrooptischen Modulator (24) um einen Mach-Zehnder-Modulator handelt.

## Claims

1. Apparatus for transmitting a signal by an optical path of the type comprising:
- an optical fibre (3),
- a first end (1) of it, a first optical assembly (12) designed on the one hand to inject into the said fibre a polarised optical input signal (SB) emerging from a source (11) and on the other hand to recover from the fibre a returning optical signal (SR) and to deliver it to electro-optical analysing means (13),
- a second end (2) of the fibre, a second optical assembly (22) designed on the one hand to receive an optical signal (SE) emerging from the fibre from the fact of transit in it of the said optical input signal, and on the other hand to return it into the fibre (3) re-modulated (24) on the basis of a locally available modulating signal (SEL),
characterised in that the modulating signal (SEL) is derived from the capture of a wide band very high frequency electromagnetic signal of analogue form,
in that the first optical assembly (12) comprises first optical means (12) forming a circulator with an input for receiving the polarised optical input signal (SB) an input/output connected to the first end of the fibre and an output connected to electro-optical analysing means (13),
in that the second optical assembly (22) comprises second optical means (22) forming a circulator, with an input/output connected to the second end of the fibre, and an output and an input associated with a loop circuit comprising, arranged in series along a uni-directional path, an electro-optical modulator (24) for modulating the optical signal (SE) emerging from the fibre by the modulating signal (SEL), and means for orthogonal conversion of the optical polarisation (25) of a kind such that the second optical assembly (22) injects in a return direction into the fibre a modulated optical signal (SE+SEL) which is a function of the wide band very high frequency electromagnetic signal and of polarisation which is orthogonal to that of the incoming signal,
whereby the electro-optical analysing means (13) permit the determination of the characteristics of the said electromagnetic signal derived from the returning optical signal.

2. Apparatus according to claim 1, characterised in that the first optical means (12) forming a circulator comprise two polarisation separating prisms.

3. Apparatus according to one of claims 1 and 2, characterised in that the second optical means (22) forming a circulator comprise an assembly of two polarisation separating prisms.

4. Apparatus according to one of the preceding claims characterised in that the polarisation-converting means comprise a half-wave plate 25,

5. Apparatus according to one of claims 1 to 4, characterised in that the said source (11) generates a base signal of constant power, the band pass of the analysing means (13) being adapted to the frequency spectrum of the wide-band very high frequency electromagnetic signal.

6. Apparatus according to one of claims 1 to 5, characterised in that the said source (110) comprises in addition an oscillator (110b) designed to modulate the optical base signal, the band pass of the analysing means (13) being matched to the frequency spectrum of the electromagnetic signal, re-centred on the frequency of the oscillator.

7. Apparatus according to one of claims 1 to 6, characterised in that the electro-optical modulator (24) is of the travelling wave type.

8. Apparatus according to claim 7, characterised in that the electro-optical modulator (24) is of the Mach-Zender type.
